(19) Europäisches Patentamt
European Patent Office
Office européen des brevets

(11) **EP 3 002 635 B1**

(12) **FASCICULE DE BREVET EUROPEEN**

(45) Date de publication et mention
de la délivrance du brevet:
**28.11.2018 Bulletin 2018/48**

(51) Int Cl.:
**G04B 1/14** *(2006.01)*     **G04B 17/06** *(2006.01)*
**F16F 1/02** *(2006.01)*

(21) Numéro de dépôt: **15186485.7**

(22) Date de dépôt: **23.09.2015**

(54) **PROCÉDÉ DE FABRICATION D'UN ÉLÉMENT RESSORT POUR MOUVEMENT HORLOGER OU AUTRE INSTRUMENT DE PRÉCISION**

HERSTELLUNGSVERFAHREN EINES FEDERELEMENTS FÜR UHRWERK ODER ANDERES PRÄZISIONSINSTRUMENT

METHOD FOR PRODUCING A SPRING ELEMENT FOR A CLOCK MOVEMENT OR ANOTHER PRECISION INSTRUMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2014 CH 14782014**

(43) Date de publication de la demande:
**06.04.2016 Bulletin 2016/14**

(73) Titulaire: **Richemont International S.A.**
**1752 Neuchâtel (CH)**

(72) Inventeur: **Herrera, Bruno**
**01210 Ornex (FR)**

(74) Mandataire: **P&TS SA (AG, Ltd.)**
**Av. J.-J. Rousseau 4**
**P.O. Box 2848**
**2001 Neuchâtel (CH)**

(56) Documents cités:
**EP-A1- 2 680 090**     **EP-A1- 2 717 103**
**WO-A1-2009/043391**     **WO-A2-2013/079939**
**FR-A- 1 176 411**     **US-A- 3 167 308**
**US-A1- 2002 191 493**     **US-A1- 2011 292 770**

**Description**

<u>Domaine technique</u>

La présente invention concerne un procédé de fabrication d'un élément ressort comportant des propriétés élastiques et motrices améliorées et destiné à équiper un mouvement horloger ou autre instrument de précision. L'invention concerne également un élément ressort fabriquée par le procédé ainsi qu'un mouvement horloger ou autre instrument de précision comprenant l'élément ressort.

<u>Etat de la technique</u>

Le ressort de barillet spiral est l'organe permettant d'emmagasiner l'énergie mécanique nécessaire au fonctionnement de la montre. Généralement, ses dimensions géométriques et les propriétés mécaniques du matériau qui le compose déterminent l'énergie potentielle que le barillet spiral est capable d'emmagasiner et le couple maximal qu'il délivre. L'énergie maximale est emmagasinée par le ressort de barillet lorsque la proportion entre la surface occupée par ce dernier, lorsqu'il est arme, et celle qui reste libre dans le tambour est d'environ 50 percent.

Les manufacturiers horlogers ont cherché de tout temps à augmenter la capacité de stockage d'énergie des ressorts de barillet et, ainsi, la réserve de marche des montres mécaniques, sans pour autant accroitre le volume, c'est-à-dire l'encombrement, des barillets. Les efforts ont principalement été dirigés vers la réduction des pertes d'énergie, notamment dues aux frottements. C'est ainsi qu'il a été proposé de revêtir le ressort de barillet d'une couche lubrifiante, par exemple un revêtement métallique ou en DLC («Diamond-Like Carbon»), pour limiter les frottements internes.

Le document EP2680090 décrit un ressort-moteur comportant une lame en l'acier austénitique afin de limiter sa sensibilité aux champs magnétiques et dont la surface externe de la lame est durcie par rapport au reste de la lame afin de durcir la lame au niveau des zones de contrainte principales tout en gardant un bas module élastique.

Le document WO09043391 décrit un ressort de barillet réalisé dans un matériau de base et dont au moins une partie de sa surface est rendue plus dure que le matériau de base à l'aide d'ions implantés afin d'augmenter la rigidité à la flexion et ainsi la capacité de stockage d'énergie du ressort de barillet.

<u>Bref résumé de l'invention</u>

La présente invention concerne un procédé de fabrication d'un élément ressort destiné à équiper un mouvement horloger ou autre instrument de précision, selon lequel on fournit une lame présentant une première limite élastique, on effectue une structuration micronique ou submicronique contrôlée dans ou sur aumoins une région structurée de la lame afin de modifier les propriétés élastiques et motrices de la lame, la région structurée comportant des cavités ou trous, et on remplit partiellement ou entièrement les cavités ou trous par un matériau différent de celui formant la lame.

Dans un mode de réalisation, la structuration micronique ou submicronique contrôlée est comprise sur toute la totalité d'une surface externe de la lame.

La présente invention concerne également un élément ressort fabriqué selon le procédé de l'invention ainsi qu'un mouvement horloger comprenant un tel élément ressort.

Dans un mode de réalisation, ladite portion subissant la structuration micronique ou submicronique contrôlée est transformée afin qu'elle comporte une seconde limite élastique différente de la première limite élastique. Selon un mode de réalisation, tout ou partie de la structuration est recouverte d'un second matériau différent de celui de la lame.

Cette solution présente notamment l'avantage par rapport à l'art antérieur de permettre une augmentation de l'énergie emmagasinée par l'élément ressort pour un matériau donné de l'élément ressort. Dans le cas d'un ressort moteur de barillet, cela se traduit par une augmentation de la réserve de marche. L'élément ressort peut être ainsi de plus petite dimension pour une même énergie emmagasinée. Un autre avantage est la possibilité d'ajuster finement l'élasticité du matériau dont est formé l'élément ressort.

<u>Brève description des figures</u>

Des exemples de mise en oeuvre de l'invention sont indiqués dans la description illustrée par les figures annexées dans lesquelles:

la figure 1 montre une vue partielle d'un élément ressort, selon un mode de réalisation;

les figures 2a et 2b montrent des surfaces nanostructurées exemplaires comprises sur l'élément ressort ;

la figure 3 montre une vue en coupe d'un mode de réalisation où la région structurée comporte un revêtement ; et

la figure 4 montre une vue en coupe d'un mode de réalisation dans lequel des cavités dans la région structurée sont remplies par un autre matériau.

Exemple(s) de mode de réalisation de l'invention

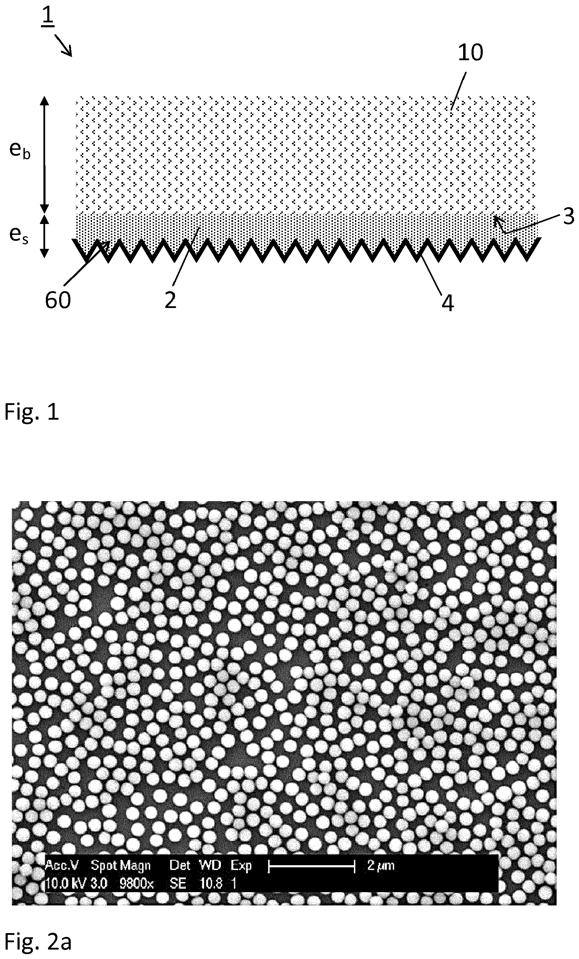

La figure 1 montre une vue partielle d'élément ressort 1 destiné à équiper un mouvement horloger ou tout autre instrument de précision, selon un mode de réalisation. L'élément ressort 1 comporte une lame 10 (ou barreau) présentant une première limite élastique $\sigma_1$. Au moins une portion de la surface externe 3 de la lame 10 comprend une structuration micronique ou submicronique contrôlée 60. Par la suite on appellera région structurée 2, la portion de la surface externe 3 de la lame 10 comprenant la structuration micronique ou submicronique contrôlée 60. Par l'expression "structuration micronique ou submicronique contrôlée" on entend une structuration fabriquée volontairement sur la portion de la surface externe 3 de la lame 10 par des moyens de structuration, par exemple par procédés lithographiques, ou autres.

Selon une forme d'exécution, la région structurée 2 comporte une seconde limite élastique $\sigma_2$. La seconde limite élastique $\sigma_2$ est plus élevée que la première limite élastique $\sigma_1$. Dans ce cas, une limite élastique de l'élément ressort 1, correspondant à la combinaison de la première et seconde limite élastique $\sigma_1$, $\sigma_2$, sera également plus élevée qu'en absence de la région structurée 2.

L'énergie maximale $U_{max}$ pouvant être emmagasinée dans l'élément ressort 1 est donné e par l'équation 1:

$$U_{max} \;=\; \frac{e\,h\,L}{6}\;\frac{\sigma^2}{E} \qquad\qquad (1)$$

où e est l'épaisseur, h la hauteur, L la longueur, E le module d'élasticité et $\sigma$ la limite élastique de l'élément ressort 1. L'élément ressort 1 comprenant la région structurée 2 adaptée pour qu'elle ait une seconde limite élastique $\sigma_2$ plus élevée que la première limite élastique $\sigma_1$ peut donc emmagasiner une plus grande énergie maximale $U_{max}$ que l'élément ressort 1 ne comprenant pas la région structurée 2.

Les ressorts moteurs de barillet sont conventionnellement fabriqués dans un matériau offrant une limite élastique élevée et un module élevé. Un tel matériau comprend typiquement le Nivaflex 45/5 comportant une limite élastique autour de 3100 MPa et un module autour de 220 GPa. Ces matériaux souffrent cependant d'une sensibilité élevée aux champs magnétiques. Par exemple, dans le cas où l'élément ressort 1 est un ressort moteur de barillet, la présence de la région structurée 2 permet d'augmenter l'énergie maximale $U_{max}$ que le ressort moteur 1 peut emmagasiner. Il est donc possible de fabriquer le ressort moteur 1 dans un matériau présentant une faible sensibilité élevée aux champs magnétiques, par exemple un acier du type austénitique, et d'augmenter la limite élastique du ressort $\sigma$ par l'ajout de la région structurée 2. Un tel ressort moteur 1 comportant la région structurée 2 permet de cumuler les avantages comme la faible sensibilité aux champs magnétiques et une limite élastique $\sigma$ élevée.

La région structurée 2 peut s'étendre sur toute la surface externe 3 de la lame 10 ou seulement sur une partie de la surface externe 3. La région structurée 2 peut, par exemple, être comprise dans des zones de contrainte principales du ressort 1.

La région structurée 2 peut également plus ou moins s'étendre en profondeur dans l'épaisseur de la lame 10. Par exemple, une profondeur, ou épaisseur $e_s$, de la région structurée 2 peut être comprise entre 1% et 80% de l'épaisseur e totale du ressort 1. Il a été montré empiriquement qu'une épaisseur $e_s$ de la région structurée 2 comprise entre 5% et 40% de l'épaisseur e totale de la lame 10 peut suffire pour l'application a un ressort-moteur. Par exemple, pour une lame ressort d'une épaisseur de 80 $\mu$m, l'épaisseur $e_s$ de la région structurée 2 est de préférence entre 0.8 à 64 $\mu$m et encore de manière plus privilégiée entre 4 à 32 $\mu$m.

Selon l'invention, la structuration de la région 2 est spécifiquement contrôlée contrairement aux structures correspondant à la rugosité intrinsèque d'une surface dans son état naturel ou après une étape de fabrication (par exemple la gravure) pour la mise en forme de la lame du ressort 1. Pour cela des structures sont formées sur la surface par une étape de mise en forme de la surface qui permet un contrôle de leur géométrie (hauteur, largeur, angle d'inclinaison, forme générale), de leur distribution et de leur densité. Ces structures peuvent avoir différentes polarités vis-vis de la surface, c'est-à-dire qu'elles peuvent être en forme de pilier/colline (polarité positive) ou en forme de trou/vallée (polarité négative).

En particulier, la seconde limite élastique $\sigma_2$ peut être contrôlée par le choix des caractéristiques dimensionnelles de la typologie de la structuration micronique ou submicronique contrôlée 60 à savoir la géométrie, la densité de structuration (ratio de l'aire structurée sur la surface totale), la polarité des structures (par exemple, pilier/colline ou trou/vallée), la hauteur ou la profondeur des structures, le facteur de forme des structures (ratio hauteur sur largeur), la distribution des structures (aléatoire, aléatoire avec l'existence d'une fonction de corrélation, organisation des motifs mono- ou pluridirectionnelle, organisation des motifs constante ou à variation graduelle).

De préférence, la densité des structures comprises dans la région structurée 2 varient d'entre 15%-80% de la surface, et de manière plus privilégiée entre 20% à 60%. La distribution de ces structures peut être régulière ou irrégulière selon l'application. Les structures formées ont généralement des dimensions dans la plage de 1 à 1000 nm, de préférence entre 10 à 800 nm. Aussi, les bords des structures formées peuvent avoir des formes arrondies ou plus définies.

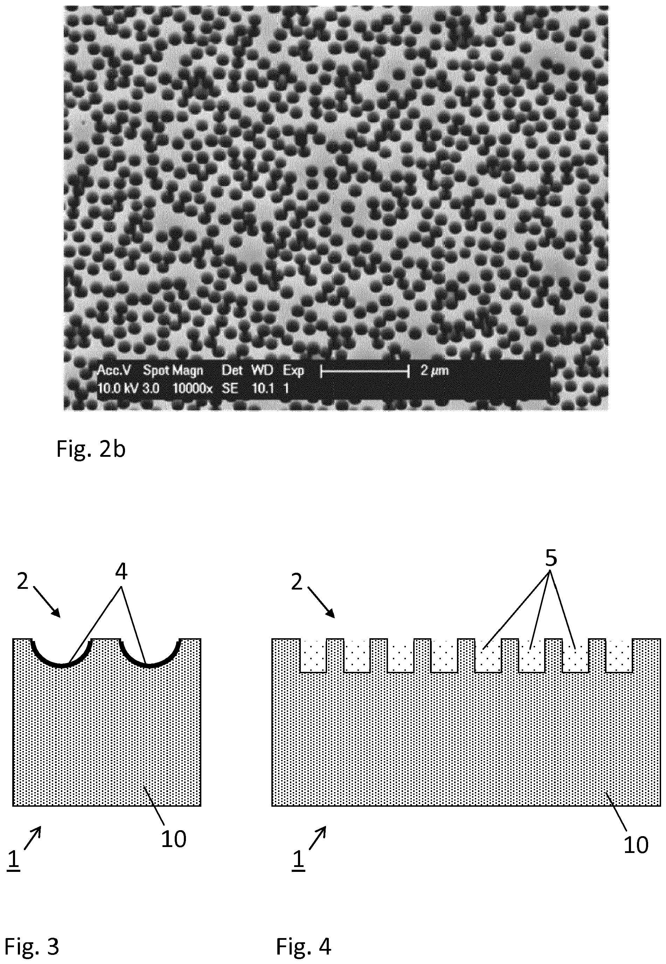

Selon un exemple, les surfaces sont structurées micronique ou submicroniquement sous forme de piliers (figure 2a) et/ou de trous (figure 2b) qui ont une largeur de 300 à 600 nm et une hauteur de 200 à 600 nm.

Dans un mode de réalisation, la structuration micronique ou submicronique contrôlée 60 comprend les modifications de la topographie de la surface (relief nanométrique), de sa composition chimique, de sa structure chimique (composition et position des atomes dans la maille), indépendamment ou simultanément.

Dans un mode de réalisation, la structuration micronique ou submicronique contrôlée 60 est fabriquée de manière contrôlée par une gravure sélective de la surface exposée par la voie de la chimie humide ou sèche au travers d'un masque de gravure ou épargne. A titre d'exemple et de manière non exhaustive, ceux-ci comprendront entre autres les procédés de gravure plasma de type RIE ou DRIE utilisant des gaz fluorés

(typiquement $SF_6$) pour les substrats en silicium et autres matériaux dérivés du silicium. D'autres solutions de gravure connues par l'homme de métier sont utilisables selon la nature des matériaux à graver. Le masque de gravure peut, à titre d'exemple, être obtenu par le transfert d'une figure interférentielle ou holographique sur une résine photosensible ((I.B. Divliansky, A. Shishido, I. Khoo, T.S. Mayer, D. Pena, S. Nishimura, C.D., Keating, T.E. Mallouk, Appl. Phys. Lett., 79 (2001), 3392), ou par lithographie par faisceau d'électron (E-beam).

De manière alternative, une méthode de lithographie colloïdale telle que décrite dans la référence: "Alternative Masks for Nanolithography", D. Ingert\*, The Open Physical Chemistry Journal, 2007, 1, 10-17, peut être avantageusement utilisée par la fabrication de la structuration micronique ou submicronique contrôlée 60. La méthode de lithographie colloïdale permet d'immobiliser des particules de taille contrôlée sur les surfaces à graver, par technique de « spin-coating » ou par technique de Langmuir-Blodgett. Le contrôle du diamètre des particules ainsi que la concentration de ces particules dans les solutions colloïdales permet d'ajuster les caractéristiques dimensionnelles de la typologie de la structuration micronique ou submicronique contrôlée 60, et notamment la densité et la taille des structures. La méthode de lithographie colloïdale est plus économique que la plupart des autres méthodes de lithographie.

Dans un autre mode de réalisation, la structuration micronique ou submicronique contrôlée 60 est usinée par une méthode de structuration directe par laser ou encore, par une méthode DLIP (Direct Laser Interference Patterning). Le principe de la méthode DLIP fait usage de l'interférence entre deux ou plusieurs faisceaux laser comme dans le cas de la lithographie holographique, en irradiant cette fois ci directement le matériau à usiner. Le processus de nanostructuration repose sur des mécanismes de nature thermique photo, photo-physique ou photochimiques, selon le type de matériau, et sur l'absorption de l'énergie du laser de manière non linéaire. La méthode DLIP permet la production de structures périodiques corrélées et organisées.

Encore dans un autre mode de réalisation, la structuration micronique ou submicronique contrôlée 60 est usinée à l'aide d'une technique de réplication, comme par exemple les techniques de « nano-imprinting » ou « soft lithography ».

Encore dans un autre mode de réalisation, la structuration micronique ou submicronique contrôlée 60 est usinée à l'aide d'un procédé d'anodisation applicable à titre d'exemple et de manière non exhaustive à l'aluminium, au titane ou au silicium.

Encore dans un autre mode de réalisation, la structuration micronique ou submicronique contrôlée 60 est réalisée par déposition de couches tribologiques sur des nanostructures préalablement usinés, par exemple par l'une des méthodes ci-dessus.

Encore dans un autre mode de réalisation, la structuration micronique ou submicronique contrôlée 60 est réalisée avec des surfaces hétérogènes obtenues, par exemple, par immobilisation de lubrifiants solides dans des structures préalablement usinées, par exemple par l'une des méthodes ci-dessus. Des exemples de lubrifiants solides peuvent comprendre le PTFE, des liquides ioniques, etc.

Encore dans un autre mode de réalisation, la structuration micronique ou submicronique contrôlée 60 est réalisée avec des surfaces hétérogènes obtenues par immobilisation de débris d'usure dans des structures préalablement usinés, par exemple par l'une des méthodes ci-dessus. Les débris d'usure contribuent à la lubrification solide.

La lame 10 peut comporter plusieurs régions structurées 2, par exemple dans plusieurs zones de contrainte principales du ressort 1. Dans ce cas, la structuration micronique ou submicronique contrôlée 60 peut comporter une typologie sensiblement différente d'une région structurée 2 à l'autre.

La structuration micronique ou submicronique contrôlée 60 de la région structurée 2, ou des régions structurées 2, peut également comprendre une pluralité de typologies.

La région structurée 2 comportant la structuration micronique ou submicronique contrôlée 60 comprend typiquement le même matériau que de celui formant la lame 10 mais peut également comprendre un matériau différent que celui de la lame 10. Dans le cas où la lame 10 comprend plusieurs régions structurées 2, au moins l'une des régions structurées 2 peut comprendre des choix de matériaux et structurations différentes, voire une absence de structuration micronique ou submicronique contrôlée 60. D'autre part, la structuration micronique ou submicronique contrôlée 60 peut comprendre une ou une combinaison de plusieurs typologies différentes et de matériaux différents de manière à répondre indépendamment et de manière optimale à chacune des sollicitations de la fonction de l'élément ressort 1. En particulier, la typologie de la structuration micronique ou submicronique contrôlée 60, et/ou le matériau, pourront être variés afin de s'adapter au changement de sollicitations mécaniques.

Le ou les matériaux peuvent être choisis ayant des propriétés optimales pour la nanostructuration et pour la limite élastique.

Encore selon un mode de réalisation, la région structurée 2 comporte un revêtement 4 formé sur la structuration micronique ou submicronique contrôlée 60 tel qu'illustré dans la figure 3. De façon préférée, le revêtement 4 est conforme à la typologie de la structuration micronique ou submicronique contrôlée 60. A titre d'exemple et de manière non exhaustive, le revêtement 4 peut être obtenu par différents procédés de déposition physique et/ou chimique, par traitement chimique et/ou thermique, et être choisis parmi les familles de couches comprenant entre autres des variantes d'oxydes, de nitrures, de carbures ou formes allotropiques du carbone. Un tel revêtement 4 permet d'accentuer les effets de surface et d'améliorer les propriétés recherchées par la structuration micronique ou submicronique contrôlée 60, par exemple la limite d'élasticité.

Selon un autre mode de réalisation des cavités ou trous de la structuration micronique ou submicronique contrôlée 60 peuvent être partiellement ou entièrement remplies par un matériau différent 5 de celui formant la lame 10, comme l'est illustré dans la figure 4.

La région structurée 2 comprenant la structuration micronique ou submicronique contrôlée 60 de l'invention comprenant une ou une combinaison de typologies ainsi qu'une combinaison de matériaux, peut être appliquée à d'autres éléments ressort utilisés dans les mouvements horlogers ou autres instruments de précision. Ici, l'expression "élément ressort" doit être comprise comme tout composant dont la fonction principale de service le fait travailler dans son domaine élastique.

Notamment, et de façon non exhaustive, la région structurée 2 comprenant la structuration micronique ou submicronique contrôlée 60 de l'invention peut être appliquée à un autre type de composant élastique horloger comme un ressort de bascule, un ressort de tirette, un ressort de rétrograde, ou un ressort spiral, une pièce destinée à être chassée, des bras d'un balancier, etc.

**Numéros de référence employés sur les figures**

| | |
|---|---|
| 1 | élément ressort |
| 10 | lame |
| 2 | région structurée |
| 3 | surface extérieure |
| 4 | revêtement |
| 5 | matériau différent |
| 60 | structuration micronique ou submicronique contrôlée |
| $\sigma_1$ | première limite élastique |
| $\sigma_2$ | seconde limite élastique |
| $e_b$ | épaisseur de la lame |
| $e_s$ | épaisseur de la structuration |
| $U_{max}$ | énergie maximale emmagasinable |

**Revendications**

1. Procédé de fabrication d'un élément ressort (1) destiné à équiper un mouvement horloger ou autre instrument de précision comprenant : fournir une lame (10) présentant une première limite élastique ($\sigma_1$), et effectuer une structuration micronique ou submicronique contrôlée (60) dans ou sur au moins une région structurée (2) de la lame (10), afin de modifier les propriétés élastiques et motrices de la lame; **caractérisé en ce que** la région structurée (2) comporte des cavités ou trous et **en ce que** le procédé comprend en outre une étape de remplissage partiel ou entier des cavités ou trous par un matériau différent (5) de celui formant la lame (10).

2. Procédé (1) selon la revendication 1, dans lequel la région structurée (2) est comprise sur toute une surface externe (3) de la lame (10).

3. Procédé selon la revendication 1 ou 2,

dans lequel ladite région structurée (2) est transformée afin qu'elle comporte une seconde limite élastique ($\sigma_2$) différente de la première limite élastique($\sigma_1$).

4. Procédé selon la revendication 3,
   dans lequel la région structurée (2) comporte un revêtement (4) formé sur la structuration micronique ou submicronique contrôlée (60).

5. Procédé selon la revendication 4,
   dans lequel le revêtement (4) est conforme à la typologie de la structuration micronique ou submicronique contrôlée (60).

6. Procédé selon l'une des revendications 3 à 5,
   dans lequel la seconde limite élastique ($\sigma_2$) est plus élevée que la première limite élastique ($\sigma_1$) de sorte que l'élément ressort (1) comporte une énergie maximale emmagasinable ($U_{max}$) plus grande que en absence de la région structurée (2) transformée.

7. Procédé selon l'une des revendications 1 à 6,
   dans lequel l'épaisseur ($e_s$) de la région structurée (2) est comprise entre 1% et 80% de l'épaisseur ($e_b$) de la lame (10), et de préférence comprise entre 5% et 40% de l'épaisseur ($e_b$) de la lame (10).

8. Procédé selon l'une des revendications 1 à 7,
   dans lequel la typologie de la structuration micronique ou submicronique contrôlée (60) est **caractérisée par** l'un ou une combinaison des paramètres suivants: une densité de structuration, une polarité, un facteur de forme, et une distribution de la structuration.

9. Procédé selon l'une des revendications 1 à 8,
   dans lequel la typologie de la structuration micronique ou submicronique contrôlée (60) est **caractérisée par** des structures d'une polarité positive ou négative

10. Procédé selon l'une des revendications 1 à 9,
    dans lequel la structuration micronique ou submicronique contrôlée (60) comprend une pluralité de typologies.

11. Procédé selon l'une des revendications 1 à 10,
    dans lequel la structuration micronique ou submicronique contrôlée (60) est réalisée par une méthode de lithographie colloïdale ou un procédé de structuration directe par laser.

12. Procédé selon l'une des revendications 1 à 11,
    dans lequel la structuration micronique ou submicronique contrôlée (60) comprend le même matériau que de celui formant la lame (10) ou un matériau sensiblement différent de celui formant la lame (10).

13. Procédé selon la revendication 12,
    dans lequel la structuration micronique ou submicronique contrôlée (60) comprend une pluralité de matériaux sensiblement différents.

14. Un élément ressort (1) fabriquée par le procédé selon l'une des revendications 1 à 13 et comprenant un ressort de barillet, un ressort de bascule, un ressort de tirette, un ressort de rétrograde, ou un ressort spiral, une pièce destinée à être chassée, ou des bras d'un balancier.

15. Mouvement horloger comprenant l'élément ressort (1) selon la revendication 14.

**Patentansprüche**

1. Verfahren zur Herstellung eines Federelements (1) zum Ausstatten eines Uhrwerks oder eines anderen Präzisionsinstruments, umfassend:

   Bereitstellen einer Klinge (10) mit einer ersten Elastizitätsgrenze ($\sigma$1), und
   Durchführen einer kontrollierten Strukturierung im Mikron- oder Submikrometerbereich (60) in oder an mindestens einem strukturierten Bereich (2) der Klinge (10), um die elastischen und motorischen Eigenschaften der Klinge zu modifizieren;

**dadurch gekennzeichnet, dass**
der strukturierte Bereich (2) Hohlräume oder Löcher aufweist, und dass das Verfahren zudem einen Schritt umfasst, die Hohlräume oder Löcher teilweise oder vollständig mit einem Material (5) zu füllen, das sich vom Material unterscheidet, das die Klinge (10) bildet.

2. Verfahren (1) gemäss Anspruch 1, worin der strukturierte Bereich (2) auf einer gesamten äusseren Oberfläche (3) der Klinge (10) enthalten ist.

3. Verfahren gemäss Anspruch 1 oder 2, worin der besagte strukturierte Bereich (2) transformiert wird, um eine zweite Elastizitätsgrenze ($\sigma 2$) zu enthalten, die sich von der ersten Elastizitätsgrenze ($\sigma 1$) unterscheidet.

4. Verfahren gemäss Anspruch 3, worin der strukturierte Bereich (2) eine Beschichtung (4) aufweist, welche auf der kontrollierten Strukturierung im Mikron- oder Submikrometerbereich (60) ausgebildet ist.

5. Verfahren gemäss Anspruch 4, wobei die Beschichtung (4) der Typologie der kontrollierten Strukturierung im Mikron- oder Submikrometerbereich (60) entspricht.

6. Verfahren gemäss einem der Ansprüche 3 bis 5, worin die zweite Elastizitätsgrenze ($\sigma 2$) höher als die erste Elastizitätsgrenze ($\sigma 1$) ist, so dass das Federelement (1) eine maximale speicherbare Energie ($U_{max}$) aufweist, welche grösser als diejenige in Abwesenheit der transformierten strukturierten Region (2) ist.

7. Verfahren gemäss einem der Ansprüche 1 bis 6, worin die Dicke ($e_s$) des strukturierten Bereichs (2) zwischen 1% und 80% der Dicke ($e_b$) der Klinge (10) liegt, vorzugsweise zwischen 5% und 40% der Dicke ($e_b$) der Klinge (10).

8. Verfahren gemäss einem der Ansprüche 1 bis 7, worin die Typologie der kontrollierten Strukturierung im Mikrometer- oder Submikrometerbereich (60) durch einen oder eine Kombination der folgenden Parameter gekennzeichnet ist: eine Strukturierungsdichte, eine Polarität, ein Formfaktor, und eine Verteilung der Strukturierung.

9. Verfahren gemäss einem der Ansprüche 1 bis 8, worin die Typologie der kontrollierten Strukturierung im Mikrometer- oder Submikrometerbereich (60) durch Strukturen mit positiver oder negativer Polarität gekennzeichnet ist.

10. Verfahren gemäss einem der Ansprüche 1 bis 9, worin die kontrollierte Strukturierung im Mikrometer- oder Submikrometerbereich (60) eine Mehrzahl von Typologien umfasst.

11. Verfahren gemäss einem der Ansprüche 1 bis 10, worin die kontrollierte Strukturierung im Mikrometer- oder Submikrometerbereich (60) durch ein Kolloidlithographieverfahren oder ein Direktlaserstrukturierverfahren durchgeführt wird.

12. Verfahren gemäss einem der Ansprüche 1 bis 11, worin die kontrollierte Strukturierung im Mikrometer- oder Submikrometerbereich (60) das gleiche Material aufweist wie dasjenige, welches die Klinge (10) bildet, oder ein Material aufweist, das sich wesentlich von demjenigen, welches die Klinge (10) bildet, unterscheidet.

13. Verfahren gemäss Anspruch 12, worin die kontrollierte Strukturierung im Mikrometer- oder Submikrometerbereich (60) eine Mehrzahl von im Wesentlichen unterschiedlichen Materialien umfasst.

14. Federelement (1), hergestellt durch das Verfahren gemäss einem der Ansprüche 1 bis 13 und umfassend: eine Zugfeder, eine Kippfeder, eine Schiebefeder, eine Rückstellfeder oder eine Spiralfeder, ein einzupressendes Teil, oder die Arme einer Unruh.

15. Uhrwerk mit dem Federelement (1) gemäss dem Anspruch 14.

**Claims**

1. Method for producing a spring element (1) for a clockwork movement or another precision instrument comprising:

provide a blade (10) presenting a first elastic limit ($\sigma_1$), and effect a controlled micron or sub-micron structuring (60) in or on at least one structured area (2) of the blade (10), in order to modify the elastic and motor properties of the blade; **characterised in that**
the structured area (2) comprises cavities or holes
and **in that** the method comprises moreover a partial or total filling step of the cavities or holes by a different material (5) from that forming the blade (10).

2. Method (1) according to claim 1,
wherein said structured area (2) is comprised on an entire external surface (3) of the blade (10).

3. Method according to claim 1 or 2,
wherein said structured area (2) is transformed in order to comprise a second elastic limit ($\sigma_2$) different from the first elastic limit ($\sigma_1$).

4. Method according to claim 3,
wherein the structured area (2) comprises a coating (4) formed on the controlled micron or sub-micron structuring (60).

5. Method according to claim 4,
wherein said coating (4) conforms to the typology of the controlled micron or sub-micron structuring (60).

6. Method according to one of the claims 3 to 5,
wherein the second elastic limit ($\sigma_2$) is higher than the first elastic limit ($\sigma_1$) such that the spring element (1) comprises a maximum storable energy ($U_{max}$) greater than in the absence of the transformed structured area. (2)

7. Method according to one of the claims 1 to 6,
wherein the thickness ($e_s$) of the structured area (2) is comprised between 1% and 80% of the thickness ($e_b$) of the blade (10), and preferably comprised between 5% and 40% of the thickness ($e_b$) of the blade (10).

8. Method according to one of the claims 1 to 7,
wherein the typology of the controlled micron or sub-micron structuring (60) is **characterised by** one or a combination of the following parameters: a density of structure, a polarity, a form factor, and a distribution of the structure.

9. Method according to one of the claims 1 to 8,
wherein the typology of the controlled micron or sub-micron structuring (60) is **characterised by** the structures of a positive or negative polarity.

10. Method according to one of the claims 1 to 9,
wherein the controlled micron or sub-micron structuring (60) comprises a plurality of typologies.

11. Method according to one of the claims 1 to 10,
wherein the controlled micron or sub-micron structuring (60) is realised by means of a colloidal lithography or a direct laser structuring method.

12. Method according to one of the claims 1 to 11,
wherein the controlled micron or sub-micron structuring (60) comprises the same material as that forming the blade (10) or a substantially different material than that forming the blade (10).

13. Method according to claim 12,
wherein the controlled micron or sub-micron structuring (60) comprises a plurality of substantially different materials.

14. A spring element (1) produced by the method according to one of the claims 1 to 13 and comprising a barrel spring, a lever spring, a pull-out piece spring, a retrograde spring, or a spiral spring, a piece intended to be driven, or the arms of a balance.

15. Clockwork movement comprising a spring element (1) according to claim 14.

Fig. 1

Fig. 2a

Fig. 2b

Fig. 3

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2680090 A

- WO 09043391 A

**Littérature non-brevet citée dans la description**

- **I.B. DIVLIANSKY ; A. SHISHIDO ; I. KHOO ; T.S. MAYER ; D. PENA ; S. NISHIMURA ; C.D., KEATING ; T.E. MALLOUK.** *Appl. Phys. Lett,* 2001, vol. 79, 3392

- **D. INGERT.** Alternative Masks for Nanolithography. *The Open Physical Chemistry Journal,* 2007, vol. 1, 10-17